# EUROPEAN PATENT APPLICATION

(11) **EP 2 487 373 A1**
(43) Date of publication of application: **15.08.2012**
(21) Application number: 12154050.4
(22) Date of filing: 06.02.2012
(51) Int. Cl.: F16B 12/20

(54) **Joining device for panels of a piece of furniture**

(30) Priority: 09.02.2011 IT MI20110191
(71) Applicant: O.M.M. s.a.s. dell'Ing. Roberto Mariani & C., 20832 Desio (MB) (IT)
(72) Inventor: Mariani, Roberto Natale, 20832 Desio (MB) (IT)
(74) Representative: Colombo, Stefano Paolo

(57) **Abstract**

A joining device for fastening together a first panel (200) and a second panel (100) of a piece of furniture is described. The joining device comprises a pin (2) configured to be fixed to the first panel and a bush (3) configured to be mounted in the second panel. The pin (2) comprises a central body (22) and a tail (23) aligned along a longitudinal axis. The tail has an end portion comprising a notch (24). The bush (3) is configured to receive at least the end portion of the tail. The end portion of the tail (23) has a cross-section which, in a direction perpendicular to the longitudinal axis, has a width less than the central body (22).

## Description

The present invention relates to a joining device for fastening together two panels of a piece of furniture or the like.

As is known, a piece of furniture typically comprises two vertical panels (commonly called "flanks" or "shoulders"), a horizontal bottom panel (commonly called "base"), and a top panel which is also horizontal (commonly called "top"). Moreover, the piece of furniture may comprise a number of horizontal intermediate panels, otherwise called "shelves".

Typically, the panels of the piece of furniture consist of chipboard, laminated, hollow cored, plywood or solid panels.

During assembly of the piece of furniture, the shoulders are typically fastened to the bottom panel of the piece of furniture and to the top panel. Furthermore the intermediate panels are usually fastened to the shoulders of the piece of furniture in order to form shelves or reinforce the piece of furniture.

Joining devices are used to fasten the panels together.

The patent IT1326283, in the name of the same Applicant, describes a device for joining together boards of a piece of furniture, comprising at least a pin, a bush and an adjusting screw. The adjusting screw has a tapered tip and the pin has two flared seats and an eyelet connecting them. The pin can be mounted in a first board. The bush holding the screw can be mounted in a second board and is able to receive the pin portion with the two flared seats and the eyelet. The tapered tip of the adjusting screw is able to engage with either one of the flared seats of the pin in order to exert a pulling force on the pin and fasten together the first and second board.

The known device is efficient and compact. Nevertheless, the Applicant has noted that there exists the need to provide a joining device which is even more compact than the known device.

In particular, the object of the present invention is to provide a joining device for fastening together two panels of a piece of furniture or the like, the bush of which has a small diameter, for example of less than 10 mm.

For the sake of simplicity, in the remainder of the present description and in the claims, the joining device will also be referred to simply as "device". Moreover, in the remainder of the present description, by way of a non-limiting example, reference will be made to use of the joining device for fastening a horizontal panel (for example a shelf) to a shoulder of piece of furniture.

According to one aspect of the invention, a joining device for fastening together a first panel and a second panel of a piece of furniture is provided, the joining device comprising:
- a pin configured to be fixed to the first panel; and
- a bush configured to be mounted in the second panel;
   wherein the pin comprises a central body and a tail aligned along a longitudinal axis, the tail having an end portion comprising a notch,
   wherein the bush is configured to receive at least the end portion of the tail, and
   wherein at least the end portion of the tail has a cross-section which, in a direction perpendicular to the longitudinal axis, has a width smaller than the central body.

Preferably, the joining device further comprises an adjusting screw, the adjusting screw having a tapered tip configured to interfere with the notch for locking the end portion inside the bush.

Preferably, the notch is substantially V-shaped, the notch comprising two inclined side walls which form an angle greater than 90°.

According to an advantageous variant, the notch is substantially V-shaped with a rounded vertex.

According to preferred embodiments, the end portion comprises a further notch arranged in an opposite position to the notch with respect to the longitudinal axis.

Preferably the end portion of the tail has a cross-section of substantially rectangular shape with curved short sides.

Preferably the bush comprises a hollow cylinder having a side wall defining an axial hole, wherein the side wall comprises two opposite eyelets configured to house the end portion of the tail in order to allow the end portion to engage the axial hole.

Preferably the bush has at least a first open end.

Preferably the axial hole has a thread which extends over at least part of the length of the bush.

Preferably the bush has a diameter the same as that of the central body.

The present invention will become clear from the following detailed description, provided by way of a non-limiting example, to be read with reference to the accompanying drawings in which:
- Figures 1a, 1b and 1c are, respectively, an axonometric view, a plan view and a cross-sectional view along the plane A-A of a joining device according to a first embodiment of the present invention;
- Figures 2a, 2b and 2c are, respectively, an axonometric view, a longitudinal view and a plan view of the pin of the device according to the first embodiment of the present invention;
- Figures 3a and 3b are, respectively, an axonometric view and a longitudinal view of the pin of the device according to a variant of the first embodiment of the present invention;
- Figures 4a and 4b are, respectively, an axonometric view and a plan view of the pin of the device according to a further variant of the first embodiment of the present invention;
- Figures 5a, 5b, 5c and 5d are, respectively, an axonometric view, a side view, a plan view and a cross-sectional view along the plane B-B of the bush of the device according to the first embodiment of the present invention;
- Figures 6a and 6b are, respectively, a side view and a plan view of the adjusting screw;
- Figure 7 shows the device, a shoulder and a horizontal panel of a piece of furniture, before assembly;
- Figure 8 shows the device, the shoulder and the horizontal panel, after assembly;
- Figures 9a and 9b are, respectively, a cross-sectional view along the plane C-C and a cross-sectional view along the plane D-D of Figure 8;
- Figures 10a and 10b are, respectively, an axonometric view and a side view of the pin of a joining device according to a second embodiment of the present invention; and
- Figures 11a, 11b and 11c are, respectively, an axonometric view, a plan view and a cross-sectional view along the plane B'-B' of the bush of the joining device according to a second embodiment of the present invention.

The figures are not to scale.

With reference to the Figures, a joining device 1 for fastening together two panels of a piece of furniture or the like according to a first embodiment of the present invention will now be described.

The joining device 1 preferably comprises a pin 2, a bush 3 and an adjusting screw 4.

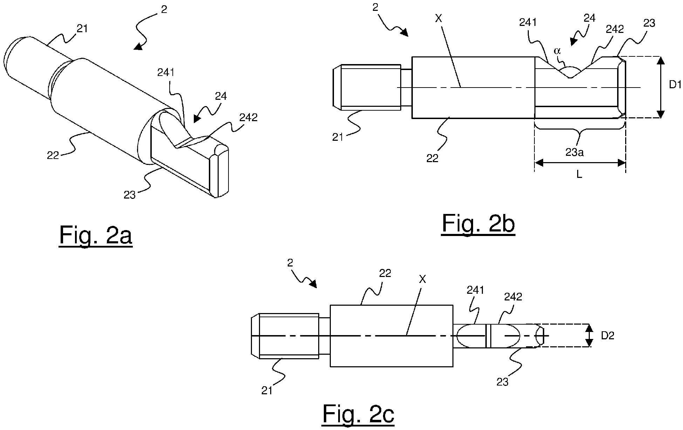

With reference to Figures 2a, 2b and 2c, the pin 2 comprises a head 21, a central body 22 and a tail 23 which are aligned along a longitudinal axis X.

The head 21 is in the form of a solid cylinder with a circular cross-section. Moreover, the head 21 is preferably threaded externally.

The central body 22 of the pin 2 is also in the form of a solid cylinder with a circular cross-section. Preferably, the diameter of the cross-section of the central body 22 is greater than the diameter of the cross-section of the head 21.

Preferably, the diameter of the cross-section of the central body 22 is between 3 mm and 10 mm. By way of example, the diameter of the cross-section of the central body 22 may be between about 3 mm, about 5 mm or about 8 mm. Preferably, the length of the central body 22 is between 10 mm and 30 mm.

The tail 23 of the pin 2 has preferably an end portion 23a with a cross-section which, at least in the radial direction (namely in a direction perpendicular to the longitudinal direction X) has a width smaller than the diameter of the central body 22. For example, as shown in Figures 2a, 2b and 2c, the end portion 23a of the tail 23 may have a cross-section of substantially rectangular shape with the short sides formed by curved lines, typically arcs of a circumference. Moreover, the end of the tail end portion 23a is preferably chamfered so as to facilitate insertion of the tail end portion 23a inside the bush 3, as will be described in greater detail below.

The greater dimension D1 of the cross-section of the end portion 23a is preferably substantially equal to the diameter of the central body 22, while its smaller dimension D2 is preferably smaller than the diameter of the central body 22. Preferably, the smaller dimension D2 is between 1.2 mm and 5 mm. For example, the smaller dimension D2 may be equal to about 2.5 mm or about 4 mm. Moreover, preferably the tail 23 has a length L of between 6 mm and 14 mm. For example the length L of the tail 23 may be about 7 mm, about 10 mm, about 11 mm or about 12 mm.

Moreover, preferably, the end portion 23a of the tail 23 has a substantially V-shaped notch 24. The notch 24 has two inclined side walls 241 and 242 which form an angle α which is preferably greater than 90°, and preferably between 100° and 110°. The notch 24 may be formed by means of milling of the end portion 23a.

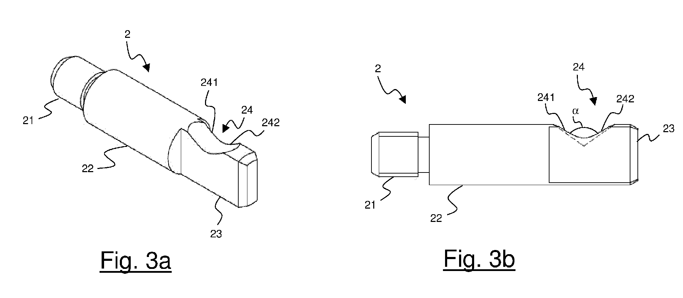

According to an advantageous variant of the first embodiment shown in Figures 3a and 3b, the notch 24 is V shaped with a rounded vertex. In this case, the notch 24 may be formed by means of boring of the end portion 23a and not by means of milling. This allows advantageously the cost of manufacture of the pin 2 to be reduced.

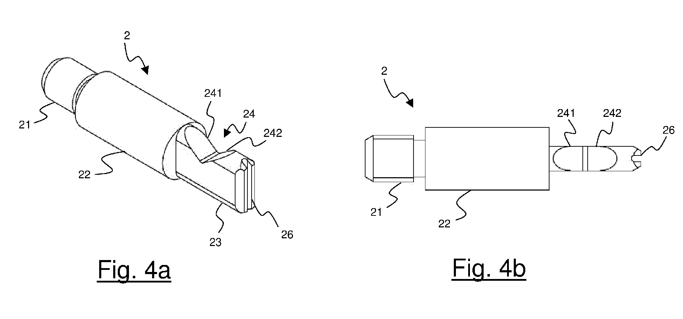

According to a further variant of the first embodiment shown in Figures 4a and 4b, the tail 23 may have a groove 26 at its end opposite to the central body 22. The groove 26 is preferably perpendicular with respect to the longitudinal axis X.

Preferably, the pin 2 is formed as a single body made of metallic material, for example steel, aluminium, zamak or alloys thereof.

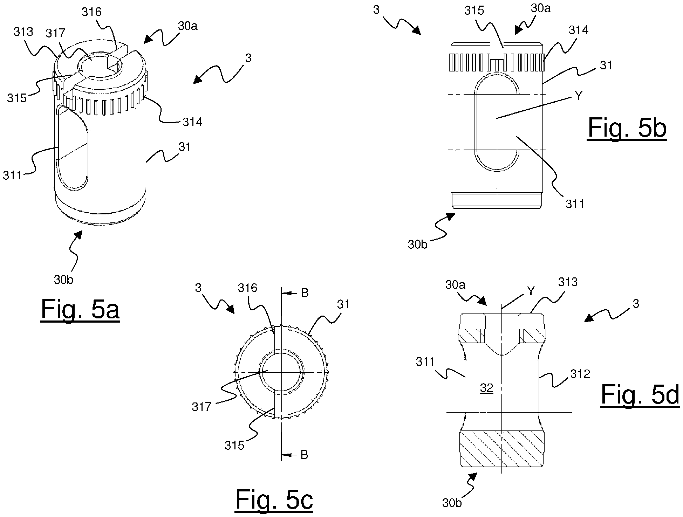

With reference to Figures 5a-5d, the bush 3 of the joining device 1 has the form of a hollow cylinder with a longitudinal axis Y and a circular cross-section. According to a first embodiment, the bush 3 has a first open end 30a and a second closed end 30b.

The bush 3 comprises a cylindrical side wall 31. The side wall 31 has two eyelets 311 and 312 situated in positions diametrically opposite each other. The eyelets 311 and 312 have the same form and size. In particular, the eyelets 311 and 312 have an elongated form. The form and size of the eyelets 311 and 312 is such as to be able to house the end portion 23a of the tail 23 of the pin 2, as will be described in greater detail hereinbelow.

The side wall 31 of the bush 3 has, on its outer surface at the first open end 30a, an annular knurling 314.

Moreover, the side wall 31, at the first open end 30a. has an edge 313 in the thickness of which two diametrically aligned slots 315 and 316 are formed. Each of the two slots 315, 316 is positioned aligned with a respective eyelet 311, 312.

As mentioned above, the end 30a is open. In fact, it is provided with a hole 317 having an axis coinciding with the axis Y. The hole 317 has a thread (not shown in the Figures) which extends from the open end 30a of the bush over at least part of the length of the bush 3.

The bush 3 may have an outer diameter greater than or smaller than the diameter of the central body 22 of the pin 2. According to particularly advantageous embodiments, the outer diameter of the bush 3 is the same as the diameter of the central body 22 of the pin 2. Preferably, the outer diameter of the bush 3 is between 3 mm and 10 mm. For example, the outer diameter of the bush 3 may be equal to about 3 mm, about 5 mm or about 8 mm.

Preferably, the bush 3 is formed as a single body made of metallic material, for example steel; aluminium or alloys thereof.

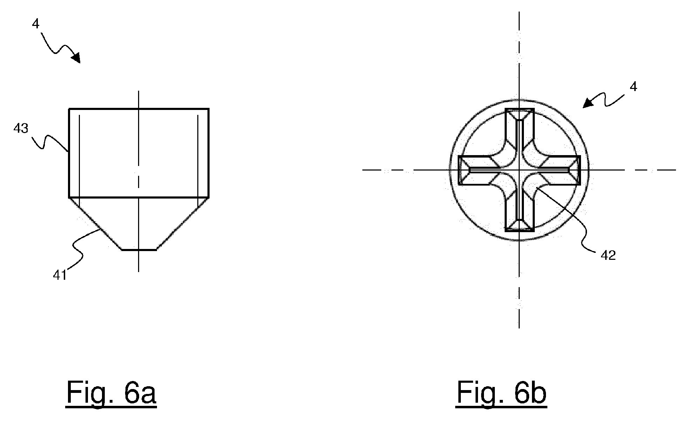

Figure 6a and 6b show the adjusting screw 4 according to an embodiment of the present invention. The adjusting screw 4 has a first tapered tip 41 with a frustoconical form and a thread (not shown in the Figures) which extends over the entire length of the screw 4, except for the tapered tip.

According to a preferred embodiment, at the end opposite to the tapered tip 41, the screw 4 has a cross-like slit 42 configured to engage with the head of a Phillip's screwdriver or similar tool. Alternatively, the end opposite to the tapered tip 41 may have a cavity with a polygonal cross-section, for example a hexagonal cross-section, so as to engage with an Allen key.

Preferably, the screw 4 is made of steel.

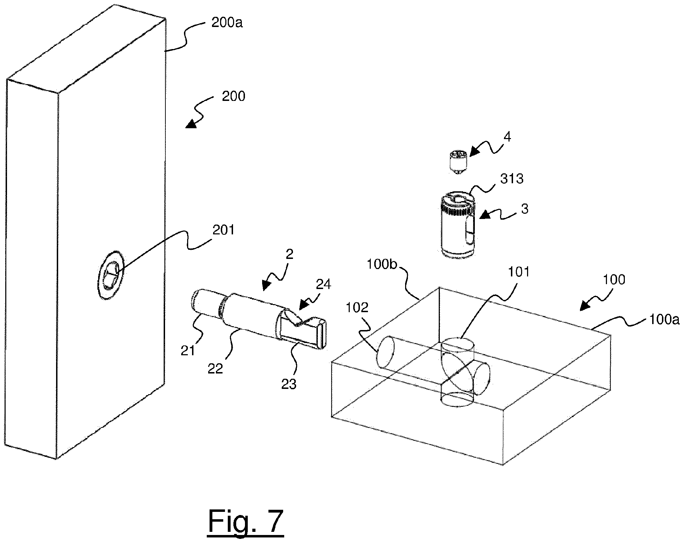

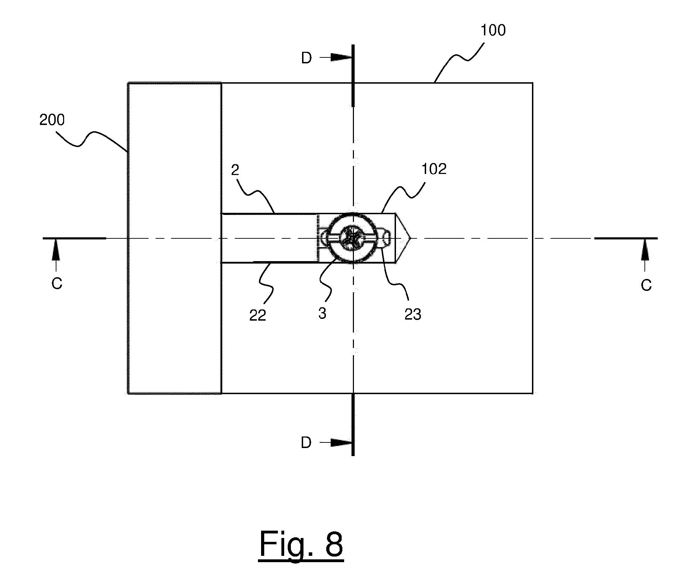

With reference to Figures 7, 8, 9a and 9b, the use of the joining device 1 for fastening a horizontal panel 100 to a shoulder 200 of a piece of furniture or the like will be described below.

In particular, two holes are formed in the horizontal panel 100: a first hole 101 is formed perpendicularly with respect to the horizontal surface 100a of the panel 100 and a second hole 102 is formed in the thickness of the panel 100 along an edge 100b of the panel 100, in a direction perpendicular to the first hole 101. The first hole 101 is situated at a distance from the edge of the panel 100b greater than or equal to the sum of the length of central body 22 and the length of the tail portion 23 comprised between the central body 22 and the vertex of the V-shaped notch 24. The first hole 101 is moreover situated at a distance from the edge 100b smaller than the sum of the length of central body 22 and the length of the tail portion 23 comprised between the central body 22 and the edge of the side wall 242 situated furthest from the central body 22.

Both the holes 101, 102 may be blind holes. Alternatively, the first hole 101 may be a through-hole passing through the thickness of the panel 100. The two holes 101 and 102 intersect at a right angle, as shown in Figure 7.

Firstly, the operator mounts the bush 3 in the horizontal panel 100. In particular, the operator inserts the bush 3 inside the first hole 101 so that the open end 30a of the bush 3 is directed towards the outside of the panel 100. The operator pushes the bush 3 inside the first hole 101 until the edge 313 with the slots 315 and 316 is substantially flush with the surface 100a and the eyelets 311 and 312 present on the side wall 31 of the bush 3 engage with the intersection between the holes 101, 102. Moreover, the operator, during this operation, rotates the bush 3 about its axis Y so that the slots 315 and 16 are arranged parallel to the second hole 102. In this way, advantageously, the eyelets 311 and 312 are also aligned with respect to the direction of the second hole 102.

The annular knurling 314 present on the side wall 31 of the bush 3 advantageously keeps the bush 3 stably in position inside the first hole 101.

Moreover, the pin 2 is fixed to the shoulder 200 either by means of screwing directly inside a hole formed in the said shoulder or by means of screwing inside the hole of a bush 201 inserted beforehand inside a hole of the shoulder. In order to screw the pin 2 into the shoulder 200 an operator may use a tool, such as a pair of pliers or a fixed spanner gripping the tail of the pin which has two parallel flat surfaces. Alternatively, if the tail 23 of the pin 2 has the groove 26 shown in Figures 4a and 4b, the operator may use a screwdriver inserted inside the groove. According to this advantageous embodiment, screwing is therefore particularly easy.

The operator screws the pin 2 until the annular edge of the central body 22 (which has a diameter greater than that of the head 21) comes into contact against the surface 200a of the shoulder 200, this preventing further screwing of the pin 2.

Once screwing has been completed, the central body 22 and the tail 23 of the pin 2 project from the surface 200a of the shoulder 220 in a direction perpendicular thereto. Moreover, when screwing has been completed, the V of the notch 24 in the tail 23 lies in a plane parallel to the plane defined by the holes 101, 102 of the panel 100 and is directed towards the surface 100a of the horizontal panel 100 through which the bush 3 is inserted.

When the bush 3 and the pin 2 are in position, the horizontal panel 100 is moved towards the shoulder 200 so as to insert the tail 23 and the central body 22 of the pin 2 inside the second hole 102. The horizontal panel 100 is pushed against the shoulder 200 until its edge 100b comes up against the surface 200a of the shoulder 200. In this configuration the end portion 23a of the tail 23 engages with the eyelets 311 and 312, thus passing through the bush 3, and the notch 24 of the tail 23 is housed inside the bush 3.

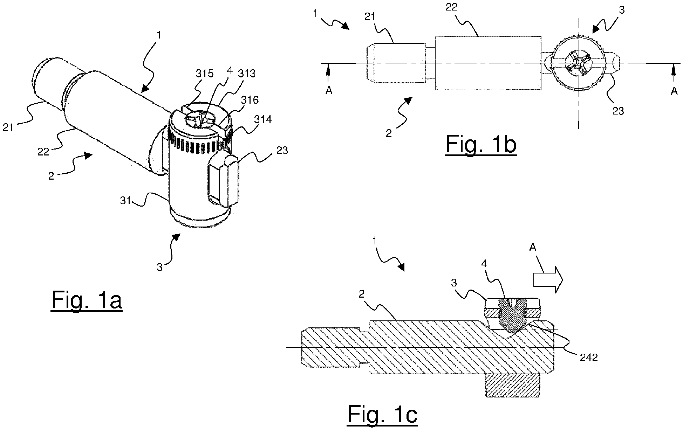

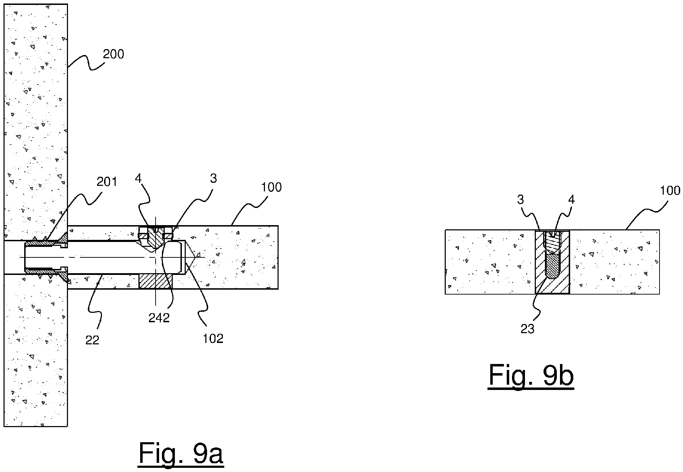

At this point, the adjusting screw 4 is inserted inside the bush 3 at the open end 30a and screwed into it. The operation of screwing the screw 4 may be performed using a tool such as a Phillip's screwdriver or an Allen key. In this way, the thread 43 of the screw 4 engages with the thread of the bush 3. The operation of screwing the screw 4 continues until its tapered end 41 with a frustoconical shape interferes with the inclined side wall of the notch 24 of the tail 23 furthest from the shoulder 200 (i.e. the wall 242), as shown in Figure 1c and 9a. In other words, the screw 4 acts as a wedge and interferes with the inclined surface formed by the wall 242. In this way, the screw 4 exerts a pulling action on the pin 2 in the direction of the arrow indicated by the letter A in Figure 1c. This pulling action firmly fixes the horizontal panel 100 to the shoulder 200.

Advantageously, the joining device 1 according to the present invention has particularly small dimensions.

In fact, once the diameter of the central body 22 has been chosen so that the device 1 is able to support the weight of the horizontal panel 100 and withstand the pulling force required to fasten it stably to the shoulder 200, the size of the bush 3 may be chosen substantially independently of the diameter of the central body 22. In particular, the size of the bush 3 must not be necessarily greater than the diameter of the central body 22 of the pin 2 since only the end portion 23a of the tail 23 (which, in the radial direction, is smaller than the diameter of the central body 22) engages with the bush 3 so as to ensure fastening between the panels. In particular, if for example the central body 22 has an outer diameter of about 8 mm, the bush 3 may also have an external dimension of about 8 mm.

Owing to the extremely small dimensions of the bush, the use of the joining device according to the results in an improvement in the aesthetic appearance of the piece of furniture.

Despite its small dimensions, the joining device 1 according to the present invention advantageously allows the assembly of panels of a piece of furniture in such a way that the connection between them is stable and strong. This is due to the efficient pulling force exerted by the adjusting screw on the pin, which allows the panels to be joined perfectly together.

Moreover, advantageously, the fact that both the pin and the bush are made of metal results in their being particularly strong and further improves the grip between the panels.

Moreover, since the bush may have the same diameter as the central body of the pin, it is possible to use the same tool (for example a drill with the same bit) in order to bore the holes for housing the pin and the bush. This results in a significant reduction in the assembly preparation time.

A joining device according to a second embodiment of the present invention will now be described.

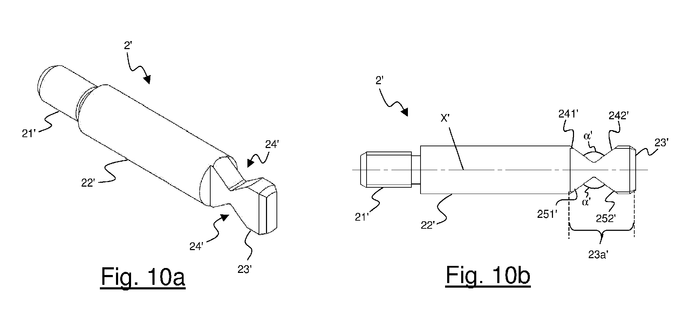

With reference to Figures 10a and 10b, this device comprises a pin 2'. The pin 2' is substantially similar to the pin 2 described above. Therefore, a detailed description of the pin 2' will not be repeated. In the description below and in the figures, the parts of the pin 2' corresponding to those of the pin 2 are denoted by corresponding reference numbers followed by an apostrophe.

Unlike the pin 2 according to the first embodiment, the tail 23' of the pin 2' comprises two substantially V-shaped notches 24' situated opposite each other. The two notches 24' have substantially the same form. In particular, each notch 24' has two inclined side walls 241' and 242' which form an angle α' greater than 90°, and preferably between 100° and 110°. According to advantageous variants not shown in the drawings, the two notches 24' may be substantially V-shaped with a rounded vertex.

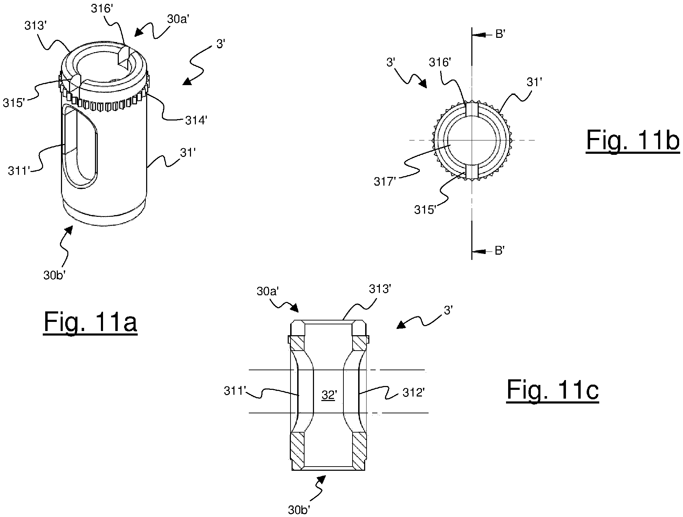

With reference now to Figures 11a, 11b and 11c, the device according to the second embodiment also comprises a bush 3'. The bush 3' is substantially similar to the bush 3 described above. Therefore, a detailed description of the bush 3' will not be repeated. In the description below and in the figures, the parts of the bush 3' corresponding to those of the bush 3 are denoted by corresponding reference numbers followed by an apostrophe.

Unlike the bush 3 according to the first embodiment, in the bush 3' both the first end 30a' and the second end 30b' are open. Moreover, the thread of the internal surface of the axial hole 317 is present at the top and at the bottom.

When the bush 3' and the pin 2' are used in order to fasten together the horizontal panel 100 and the shoulder 200 shown in Figure 7, the first hole 101 formed in the horizontal panel 100 is a through-hole, namely passes through the entire thickness of the panel 100.

The operator mounts the bush 3' in the panel 100 and fixes the pin 2' to the shoulder 220 in a manner entirely similar to that already described above.

In particular, when screwing of the pin 2' has been completed, the two V's of the opposite notches 24' of the tail 23' both lie in a plane parallel to the plane defined by the first hole and the second hole of the panel 100. Moreover, each of the two V's which are situated opposite each other is directed towards one of the two opposite horizontal surfaces of the horizontal panel 100.

Once the horizontal panel 100 has been pushed against the shoulder 200 in a manner similar to that described above, the adjusting screw 4 is inserted inside the bush 3'. According to this second embodiment of the invention the adjusting screw 4 may be inserted inside the bush 3' via either one of its two open ends 30a' and 30b' and then screwed inside it. The operation of screwing the screw 4 is continued until its tapered tip 41 interferes with the side wall of one of the two notches 24' which is furthest from the central body 22' of the pin 2', depending on whether the operator has inserted the screw 4 through the first open end 30a' or the second open end 30b'.

According to this second embodiment also, the joining device comprising the pin 2' and the bush 3' is advantageously very compact.

Moreover, according to this second embodiment, the screw may be inserted inside the bush equally well from one side of the panel or the other side. This is an advantage because on occasions one of the two sides is not free. On other occasions the second embodiment is nevertheless advantageous from an aesthetic point of view because a hole may be bored in the top side or bottom side of a panel as required. The second embodiment also has the advantage of simplifying installation because the assembly position may be obtained by means of rotation of the pin by half a turn instead of full rotation by one turn as in the first embodiment.

## Claims

1. A joining device (1) for fastening together a first panel (200) and a second panel (100) of a piece of furniture, said joining device (1) comprising:
- a pin (2, 2') configured to be fixed to said first panel (200); and
- a bush (3, 3') configured to be mounted in said second panel (100);
wherein said pin (2, 2') comprises a central body (22, 22') and a tail (23, 23') aligned along a longitudinal axis (X, X'), said tail (23, 23') having an end portion (23a, 23a') comprising a notch (24, 24'), wherein said bush (3, 3') is configured to receive at least said end portion (23a, 23a') of said tail (23, 23'), and
wherein at least said end portion (23a, 23a') of said tail (23, 23') has a cross-section which, in a direction perpendicular to said longitudinal axis (X, X'), has a width smaller than said central body (22, 22').

2. The joining device (1) according to claim 1, further comprising an adjusting screw (4), said adjusting screw (4) having a tapered tip (41) configured to interfere with said notch (24, 24') for locking said end portion (23a, 23a') inside said bush (3, 3').

3. The joining device (1) according to claim 1 or 2, wherein said notch (24, 24') is substantially V-shaped, said notch (24, 24') comprising two inclined side walls (241, 242; 241', 242') which form an angle (α) greater than 90°.

4. The joining device (1) according to claim 3, wherein said notch (24, 24') is substantially V-shaped with a rounded vertex.

5. The joining device (1) according to any one of the preceding claims, wherein said end portion (23a') comprises a further notch (24') arranged in an opposite position to said notch (24') with respect to said longitudinal axis (X').

6. The joining device (1) according to any one of the preceding claims, wherein said end portion (23a, 23a') of said tail (23, 23') has a cross-section of substantially rectangular shape with curved short sides.

7. The joining device (1) according to any one of the preceding claims, wherein said bush (3, 3') comprises a hollow cylinder having a side wall (31, 31') defining an axial hole (317, 317'), wherein said side wall (31, 31') comprises two opposite eyelets (311, 312; 311', 312') configured to house said end portion (23a, 23a') of said tail (23, 23') in order to allow said end portion (23a, 23a') to engage said axial hole (317, 317').

8. The joining device (1) according to any one of the preceding claims, wherein said bush (3, 3') has at least a first open end (30a, 30a').

9. The joining device (1) according to claim 7 or 8, wherein said axial hole (317, 317') has a thread which extends over at least part of the length of said bush (3, 3').

10. The joining device (1) according to any one of the preceding claims, wherein said bush (3, 3') has a diameter the same as that of said central body (22, 22').
